# EUROPEAN PATENT SPECIFICATION

(11) **EP 2 875 285 B1**
(45) Date of publication and mention of the grant of the patent: **13.09.2023**
(21) Application number: 13822429.0
(22) Date of filing: 16.07.2013
(51) Int. Cl.: F21V 7/22, G02B 5/08, B29D 11/00, C08L 33/06, C09D 133/06

(54) **LIGHTING DEVICES COMPRISING OPTICAL REFLECTORS, REFLECTION FILMS AND SHEETS**
BELEUCHTUNGSVORRICHTUNGEN ENTHALTEND OPTISCHE REFLEKTOREN, REFLEXIONSFOLIEN UND PLATTEN
APPAREILS D'ÉCLAIRAGE COMPRENANT DES RÉFLECTEURS OPTIQUES ET FILMS ET FEUILLES DE RÉFLEXION OPTIQUES

(30) Priority: 23.07.2012 US 201261674407 P
(43) Date of publication of application: 27.05.2015
(73) Proprietor: Trinseo Europe GmbH, 8808 Pfaeffikon (CH)
(72) Inventor: GE, Jiaxin Jason, Lower Providence,PA 19403 (US); AUBART, Mark A., West Chester, PA 19380 (US)
(74) Representative: SSM Sandmair
(86) International application number: PCT/US2013/050589
(87) International publication number: WO 2014/018301

(56) References cited:
- WO-A1-2010/101811
- WO-A1-2013/020262
- WO-A1-2013/184536
- US-A1- 2005 030 630
- US-A1- 2008 080 055
- US-A1- 2008 242 786
- US-A1- 2011 038 140
- US-A1- 2011 242 818
- US-A1- 2012 024 353
- US-B1- 6 607 794

## Description

### Field of the Invention

The invention according to present claims 1 to 15 relates to lighting devices based on acrylic polymers and white pigments which are useful as optical reflectors or optical reflection films or sheets or profiles.

### Discussion of the Related Art

Optical reflectors or optical reflection films have been widely used in LED-backlit units in liquid crystal displays (including handhelds, notebooks, desktop monitors and LCD TVs), automotive LED lighting, LED luminaire and LED lighting fixture applications. Such optical reflectors or optical reflection films offer high optical reflectance in the visible wavelength region and excellent UV resistance. Traditionally, white optical reflectors have been made from metal (Ag, Al) deposited PET (polyethylene terephthalate) films or white barium sulfate- or CaCOs-pigmented porous PET films, which are not fully UV resistant. The Ag or Al deposited mirror films/or parts usually require an additional electrical insulation layer. There has been an on-going need to develop improved optical reflectors or optical reflection films which fully meet the target performance requirements for such end use applications (e.g., high brightness, high diffused light scattering, excellent long-term UV resistance, excellent color retention (no yellowing), corrosion resistance, dimensional stability, heat resistance, excellent mechanical properties and environmental stability).

LED light sources offer much longer service life (up to 50,000-100,000 hrs) and high energy efficiency. From the LED light sources, the temperature could be as high as up to 105 °C. Therefore, the polymer materials used in LED lighting units should have sufficient thermal stability to avoid any thermal deformation, including warping, when they are close to LED lamps. For the optical reflectors used in LED lighting and LED-backlight units, it is desired to have long-term excellent UV resistance, high optical reflectance (greater than 90% at 560 nm) in the phototopic light region, high diffused Lambertian light scattering, excellent thermal dimensional stability, and excellent environmental stability. For LED lighting and LED-backlit units, high light reflectance in films is required to improve the light brightness while the high diffused light scattering is desired to increase the light recycling and light uniformity.

WO 2013/184536 A1 discloses films useful as optical reflectors which are prepared by coating a sheet of polyethylene terephthalate or other thermoplastic with acrylic polymer, white pigment, and optionally other additives such as impact modifiers, matting agents and UV stabilizers.

US 2012/024353 A1 discloses high Tg monolithic and multi-layer thermoformable film or sheet useful as a backsheet on a photovoltaic module (PV). A methacrylic-based material is preferred. The film or sheet is formed of a composition having a Tg greater than 110° C. The methacrylic composition may be a blend of a polymethyl methacrylate polymer and a miscible or semi-miscible high Tg polymer, or may be a copolymer containing primarily methyl methacrylate monomer units. The backsheet is optionally covered with a fluoropolymer or acrylic/fiuoropolymer covering on the outside (side facing the environment). The back-sheet can be clear, white, and/or pigmented. The film or sheet is especially useful in concentrating photovoltaic modules (CPV), and is also useful in thin film photovoltaic modules.

US 2008/242786 A1 discloses a translucent, white, light-diffusing thermoplastic composition containing both white pigment and refractive index-matched particles. The blend of pigment and particles provides a synergistic effect, resulting in a very high luminous transmission and good diffusion properties.

WO 2013/020262 A1 discloses a water-proof coating system for reflecting solar radiation, which comprises optionally a base layer on a substrate and a reinforcing layer on the base layer; a white reflective and water-proof layer on the substrate or on the reinforcing layer; and a decorative and reflective layer on the white reflective and water-proof layer; wherein the decorative and reflective layer comprises colored infrared-reflective pigments. Furthermore, water-borne coatings for forming a decorative and reflective layer in the coating system, which comprise acrylic polymers, colored infrared-reflective pigments and UV cross-linking agents are disclosed. Said coating system can reflect solar radiation with high efficiency and effectively prevent water from penetrating through; has strong stain resistance and good weather resistance; has strong adhesion to various substrates; and also offers diversified colors for choosing. Said water-borne coatings can be applied easily, and are environment friendly.

WO 2010/101811 A1 discloses an acrylic layer (in the form of a coating, film or sheet) useful as part of a photovoltaic module backsheet. The acrylic layer contains at least 40 percent of one or more acrylic polymers, including an acrylic polymer matrix and optionally acrylic impact modifiers. The acrylic polymer is preferably a polymer, copolymer, or terpolymer containing at least 50 weight percent of methylmethacrylate monomer units. The acrylic layer is flexible and optionally contains high levels of white pigment. It may also contain fluoropolymers such as polyvinylidene fluoride to improve weathering, processibility and film formation. The acrylic layer adheres to a polymer support layer such as polyethylene terephthalate (PET). A preferred substrate is PET that is pre-treated to improve adhesion, but unprimed PET can also be used. The backsheet provides excellent weatherability, environmental stability and reflectivity as part of a photovoltaic module.

### Brief Summary of the Invention

The invention is set out in appended claim 1. The dependent claims describe advantageous embodiments. One non-claimed aspect provides a film, profile, or sheet suitable for use as an optical reflector. The film, profile, or sheet comprises a layer of a melt-processable resin composition comprised of an acrylic polymer, a white pigment and optionally one or more other components such as impact modifiers, polyvinylidene fluoride (PVDF) and its copolymers, matting agents, UV stabilizers, antioxidants, and processing additives. The film, profile, or sheet may be monolithic (a single layer) or multi-layer.

In one non-claimed embodiment, the film, profile, or sheet comprises:
a) a substrate film layer comprised of a thermoplastic polymer; and
b) a layer of a melt-processable acrylic resin composition on at least one side of the substrate film layer, wherein the acrylic resin composition is comprised of an acrylic polymer and a white pigment.

Another non-claimed aspect provides methods of making a film, profile, or sheet suitable for use as an optical reflector. Such methods may, for example, comprise applying a layer of a melt-processable acrylic resin composition by a melt-processing technique such as extrusion or molding to at least one side of a substrate film layer comprised of a thermoplastic polymer, wherein the acrylic resin composition comprises an acrylic polymer and a white pigment, with impact modifier and/or matting agent and/or diffusing agent and/or UV stabilizer and/or antioxidant and/or processing additive optionally also being present. One non-claimed aspect provides a method which comprises co-extruding the melt-processable acrylic resin composition and a composition comprised of the thermoplastic polymer.

The acrylic resin composition may also be extruded, injection molded or otherwise melt-processed by itself (without a substrate film layer) to form a monolithic (single layer) film or sheet, which is also suitable for use as an optical reflector.

Still further non-claimed aspects provide an LED lighting unit comprising, as a back light reflector, a film, profile, or sheet comprised of a substrate film layer comprised of a thermoplastic polymer and a layer of a melt-processable acrylic resin composition on at least one side of the substrate film layer, wherein the acrylic resin composition is comprised of an acrylic polymer and a white pigment, as well as a lighting device comprised of a light emitting diode and a film comprised of a substrate film layer comprised of a thermoplastic polymer and a layer of a melt-processable acrylic resin composition on at least one side of the substrate film layer, wherein the acrylic resin composition is comprised of an acrylic polymer and a white pigment, optionally in combination with other components as previously mentioned.

In additional non-claimed aspects, the disclosure provides an LED lighting unit comprising, as a back light reflector, a monolithic film or sheet of a melt-processable acrylic resin composition comprised of an acrylic polymer, a white pigment and, as optional additional components, impact modifier, matting agent, diffusing agent, UV stabilizer, antioxidant, and/or processing additive as well as a lighting device comprised of a light emitting diode and a monolithic film comprised of the aforementioned melt-processable acrylic resin composition.

Films, profiles, and sheets in accordance with the present invention may have one or more of the following advantages as compared to other materials known in the optical reflector or optical reflection film art: very high optical reflectance, long-term UV resistance, excellent color retention (no yellowing), excellent adhesion between the acrylic resin composition layer(s) and the substrate film layer, diffused light scattering, excellent thermal dimensional stability and/or heat resistance, excellent mechanical properties and environmental stability, as well as excellent electrical insulation characteristics. The films, profiles, and sheets of the present invention are capable of offering much better color retention and gloss retention than conventional optical reflectors made from extruded white polycarbonate (PC), PET, PEN and PETG films.

### Detailed Description of the Invention

The substrate film layer component used in one embodiment of the present invention may be comprised of any suitable thermoplastic polymer such as, for example, an acrylic (e.g., a polymethylmethacrylate or a copolymer of methyl methacrylate and one or more other types of acrylic monomers, wherein the acrylic may be impact-modified), ABS (acrylonitrile-styrene-butadiene resin), ASA (acrylonitrile-styrene-acrylate resin), SAN (styrene-acrylonitrile resin), polyethylene terephthalate (PET), polyethylene naphthalate (PEN), PET-co-PEN, glycol-modified polyethylene terephthalate (PETG), PET-co-PETG, ABS/PC blends, and polycarbonate (PC). Any of the conventional thermoplastic additives such as stabilizers, fillers, pigments, PVDF and its copolymers, plasticizers and the like may also be present in the substrate film layer, in addition to the thermoplastic polymer. Thus, the substrate film layer may be formed from a composition comprised of the thermoplastic polymer and one or more additives. For example, the composition may be melt-processed by a technique such as extrusion or co-extrusion to provide the substrate film layer. The substrate film layer in various embodiments of the invention may be clear or opaque (e.g., white, grey, black). Typically, the substrate film layer is in the form of a relatively thin, flat sheet or film of substantially uniform thickness. The thickness of the substrate film layer may, for example, be from 100 to 3000 µm or from 200 to 1500 µm. The substrate film layer may be a single unitary layer of a polymer or polymer blend or may contain two or more layers of different polymers or polymer blends.

The substrate film layer may be selected so as to improve the mechanical integrity of the resulting optical reflector as well as its optical performance, in combination with one or more layers of melt-processable acrylic resin composition.

To improve the adhesion of the layer of acrylic resin composition, one or both sides of the substrate film layer may be primed. Suitable methods for treating the substrate film layer surface to enhance adhesion include corona or plasma treatment, functional silane treatment, application of an organic- or polymer-based primer coating, and the like.

The acrylic resin composition may be placed as a layer on one or both sides of the substrate film layer. Providing an acrylic resin composition layer on both sides of a clear substrate film layer has been found to provide further enhancement of the total optical reflectance. It is believed that the additional reflection from a second acrylic resin composition layer/substrate film layer interface is responsible for improving the total optical reflectance in the visible optical wavelength region as compared to a clear substrate film layer coated on one side only or as compared to a white substrate film layer coated on both sides.

If both sides are coated, the same acrylic resin composition may be employed on both sides or different acrylic resin compositions may be used. The acrylic resin composition is melt-processable and is comprised of an acrylic polymer and a white pigment. The melt-processable acrylic resin composition is characterized by the absence of volatile components such as solvents and water. According to the invention the acrylic resin composition is formulated such that it has a melt flow index of more than 0.4, in particular more than 1 or 2 g/10 minutes under 3.8 Kg at 230°C. The acrylic polymer may be any polymer containing recurring units of acrylic monomers and generally is a thermoplastic (although crosslinked acrylic polymers may also be utilized). The acrylic polymer may, for example, have a linear, branched, grafted or block copolymer structure. Suitable acrylic monomers include any of the polymerizable acrylate and methacrylate monomers known in the art. Examples of acrylic monomers include acrylic acid, methacrylic acid, and esters of acrylic and methacrylic acid such as C₁-C₆ alkyl esters of (meth)acrylic acid (e.g., methyl methacrylate, methyl acrylate, ethyl acrylate, ethyl methacrylate, n-butyl acrylate, n-butyl methacrylate and the like). The acrylic monomers may be homopolymerized or copolymerized. Acrylic copolymers include both polymers wherein two or more different acrylic monomers are copolymerized as well as polymers wherein an acrylic monomer (or mixture of acrylic monomers) is copolymerized with one or more non-acrylic monomers such as a vinyl aromatic monomer (e.g., styrene), an olefin (e.g., ethylene), (meth) acrylonitrile, a vinyl monomer, or the like.

In one embodiment of the invention, the monomer(s) used to prepare the acrylic polymer are selected such that the resulting polymer has a relatively high glass transition temperature (Tg). For example, the acrylic polymer may have a Tg of at least 80°C, at least 85°C, at least 90°C, at least 95°C, at least 100°C, at least 105°C, at least 110°C, at least 115°C, at least 120°C, or at least 125°C. In another embodiment, the acrylic polymer used has a relatively low Tg. Such a low Tg acrylic polymer may, however, be crosslinked and then used in the acrylic resin compositions of the present invention, provided the composition remains melt-processable. The Tg of a polymer may be measured by differential scanning calorimetry during the second heating process using a heating rate of 10°C/min.

The term "polymer" as used herein means both homopolymers and copolymers. The term "copolymer" as used herein means a polymer having two or more different monomer units. The copolymer could be a terpolymer with three or more different monomer units, or have four or more different monomer units. The copolymer may be a random copolymer, a gradient copolymer, or could be a block copolymer formed by a controlled radical polymerization process. The copolymer could also be a graft copolymer, or have a controlled structure such as a star or comb. In one embodiment, the acrylic polymer is formed by a free radical polymerization process, and the process can be any polymerization method known in the art, including but not limited to emulsion, solution, suspension polymerization, and can be done in bulk, semi-bulk or delayed feed.

In one embodiment, the acrylic polymer is a copolymer which contains at least 50 weight percent of methylmethacrylate monomer units, and preferably at least 75 weight percent and more preferably at least 85 weight percent methylmethacrylate monomer units. The copolymer in this embodiment contains from 1 to just less than 50, preferably 2 to 25, and more preferably 5 to 15 weight percent of at least one higher Tg monomer (high Tg monomer as used herein means the Tg of the homopolymer of that monomer). The Tg of the high Tg monomer may be, for example, at least 120°C or at least 125°C. Useful high Tg monomers include, but are not limited to, methacrylic acid, acrylic acid, itaconic acid, alpha methyl styrene, maleic anhydride, maleimide, isobornyl methacrylate, norbornyl methacrylate, t-butyl methacrylate, cyclohexyl methacrylate, acrylamide and methacrylamide

The acrylic copolymer may contain one or more other vinyl monomers copolymerizable with methyl methacrylate, including but not limited to other acrylate and methacrylate monomers or other ethylenically unsaturated monomers, included but not limited to, styrene, alpha methyl styrene, and acrylonitrile. Crosslinkers may also be present in the monomer mixture. Other methacrylate and acrylate monomers useful in the monomer mixture include, but are not limited to, methyl acrylate, ethyl acrylate and ethyl methacrylate, butyl acrylate, iso-octyl methacrylate and acrylate, lauryl acrylate and lauryl methacrylate, stearyl acrylate and stearyl methacrylate, isobornyl acrylate and methacrylate, methoxy ethyl acrylate and methacrylate, 2-ethoxy ethyl acrylate and methacrylate, dimethylamino ethyl acrylate and methacrylate monomers.

In one embodiment, the acrylic copolymer contains an acid functional monomer such as acrylic acid, methacrylic acid, maleic acid, itaconic acid or other alpha-beta unsaturated carboxylic acid monomers. The acid functional monomer content of the copolymer may be, for example, 2 to 8 or 3 to 6 weight %. In one embodiment, the balance of the copolymer may be methyl methacrylate or a monomer mixture comprised of methyl methacrylate and at least one other monomer selected from ethyl acrylate, methyl acrylate or butyl acrylate. For example, the copolymer may comprise 2 to 8 weight % acid functional monomer and 0 to 10 weight % of one or more monomers selected from ethyl acrylate, methyl acrylate and butyl acrylate, with the balance (to 100 weight %) being methyl methacrylate.

If the acrylic polymer is a copolymer, the copolymer may be, for example, a random copolymer, a block copolymer, or a graft copolymer.

The amount of acrylic polymer in the acrylic resin composition may be varied as desired, but typically the acrylic polymer content of the melt-processable acrylic layer is at least 45 weight % or at least 50 weight %. In certain embodiments, the acrylic layer does not contain more than 99 weight % or more than 95 weight % acrylic polymer, with the balance of the composition being made up of the white pigment and matting or diffusion agent and optionally impact modifier, UV stabilizer, antioxidant, processing additives and other adjuvants.

The acrylic polymer may, in one embodiment of the invention be impact-modified. That is, the acrylic resin composition may comprise one or more impact modifiers in addition to the acrylic polymer and the white pigment. The impact modifier may be prepared or obtained separately from the acrylic modifier and then combined with the acrylic polymer to prepare the acrylic resin composition, or the acrylic polymer may be impact-modified during its preparation. Any of the impact modifiers known in the acrylic resin art may be employed for this purposes including, for example, block copolymers, random copolymers, graft copolymers, homopolymers, core-shell impact modifiers and the like. Typically, the impact modifier will either be rubbery (elastomeric) having a Tg below 20°C or below 0°C or contain at least one phase or segment that is rubbery and has a Tg below 20°C or below 0°C.

In certain embodiments, the impact modifiers are core-shell multi-layer polymers and/or block copolymers having at least one hard and at least one soft block. The core-shell (multi-layer) impact modifiers could have a soft (rubber or elastomer) core and a hard shell, a hard core covered with a soft elastomer layer and then a hard shell, or other core-shell morphology known in the art. The rubber layers are composed of low glass transition (Tg) polymers, including, but not limited to, polymers of butyl acrylate (BA), ethylhexyl acrylate (EHA), butadiene (BD), butylacrylate/styrene, siloxane and many other combinations. The elastomeric or rubber layer may be crosslinked by a multifunctional monomer for improved energy absorption. Crosslinking monomers suitable for use as the crosslinker in the core-shell impact modifier are well known to those skilled in the art, and are generally monomers copolymerizable with the monounsaturated monomer present, and having ethylenically multifunctional groups that have approximately equal reactivity. Examples include, but are not limited to, divinylbenzene, glycol of di- and trimethacrylates and acrylates, triol triacrylates, methacrylates, and allyl methacrylates, etc. A grafting monomer may also be used to enhance the interlayer grafting of impact modifiers and the matrix/modifier particle grafting. The grafting monomers can be any polyfunctional crosslinking monomers.

For soft core multi-layered impact modifiers, the core may comprise from 30 to 85 percent by weight of the impact modifier and the outer shells may comprise from 15 to 70 weight percent of the impact modifier. The crosslinker in the elastomeric layer may range from 0 to 5.0% by weight.

If impact modifier is present in the acrylic resin composition, it may comprise, for example, up to 40 % by weight of the acrylic resin composition. For example, the impact modifier content of the acrylic resin composition may be 5 to 40 weight % or 15 to 35 weight %. In one embodiment, the weight ratio of acrylic polymer: impact modifier is from 1: 1 to 3:1.

The acrylic resin composition further contains one or more white pigments. The pigments generate diffused lighting scattering in the visible wavelength region. The white pigments should have a relatively high refractive index (e.g., n>1.5) while the Celocor^{®} hollow particles (from Arkema Coating Resins) with a lower refractive index also can generate high light scattering. Typically, suitable pigments are particulate in form having, for example, average particle sizes of from 50 to 2000 nm or 100 to 1500 nm. Larger particle size pigments may also be employed; as the average particle size increases, the pigment may impart a matting effect to the layer of acrylic resin composition (i.e., reduce the surface gloss), which may be advantageous in certain applications. Suitable white pigments include, but are not limited to, zinc oxide, PdS, titanium dioxide and barium sulfate. The titanium dioxide may be rutile titanium dioxide produced by the chloride process. The pigment may be treated with an inorganic- or organic-based material to improve UV resistance and/or light scattering. The white pigment content of the acrylic resin composition is generally at least 1 weight %, at least 2 weight % or at least 4 weight %. According to the invention the acrylic resin composition does not contain more than 40 weight % white pigment.

In addition to the white pigment, the acrylic resin composition contains one or more matting agents and/or diffusing agents which serve to promote diffused light scattering (in the bulk and on the surface) for better light uniformity in the films and sheets of the present invention. The matting agents are generally particulate and may, for example, be relatively large particles of inorganic substances (e.g., barium sulfate, metal oxides such as alumina and silicon oxides) or organic (including polymeric) substances (e.g., Paraloid^{®} EXL5136 and other optical properties modifiers sold by Dow Chemical under the Paraloid EXL brand name, Orgasol^{®} polyamide from Arkema, acrylic matting agents sold by the Altuglas division of Arkema such as Altuglas^{®} BS130 and BS110, Acryperl^{®} 100 sold by Arkema, fluorohomopolymers and fluorocopolymers such as polyvinylidene fluoride (PVDF) or vinylidene fluoride/hexafluoropropylene copolymers). Hollow particles, and in particular hollow sphere particles may also be used as diffusing agents. The polymeric matting agents may have relatively small average particle size, e.g., 5 to 100 µm. According to the invention the matting agent content of the acrylic resin composition is up to 20 weight % (e.g., 1 to 15 weight %). In one embodiment, an amount of matting agent is present in the acrylic resin composition which is effective to provide the film, profile, or sheet with a surface gloss at a measuring angle of 60 degrees of less than 30 GU or less than 10 GU (e.g., 4-9 GU).

Low surface gloss may also be achieved through micro-scaled surface embossing techniques such as the use of embossing rolls and textured/matting mold surfaces used in injection moldings.

Additionally, the acrylic resin composition may contain one or more UV stabilizers (e.g., Tinuvin^{®} 234, Tinuvin^{®} 360, Tinuvin^{®} 328, Tinuvin^{®} 329), antioxidants (e.g., Irganox^{®} 1010, Irganox^{®} 1035, Irganox^{®} 1076, Irganox^{®} 245) and/or processing additives (e.g., Irgafos^{®} 126, Irgafos^{®} 168), typically at levels of 0.5 to 5 weight % in total.

In one embodiment, the melt-processable acrylic resin composition comprises 40 to 91.5 weight % acrylic polymer having a Tg of at least 90°C, 2 to 40 weight % white pigment having a refractive index n > 1.5, 5 to 40 weight % core-shell impact modifier, 1 to 15 weight % particulate polymeric matting agent, and 0.5 to 5 weight % total of one or more additives selected from the group consisting of UV stabilizers, antioxidants and processing additives, the total equaling 100%.

The components of the acrylic resin composition may be selected so as to provide an optical reflectance in the finished film or sheet of at least 90%, at least 96% or at least 98% at 560 nm.

The acrylic resin composition may be placed as a layer on one or both sides of the substrate film layer, with a primer coat optionally being present between the acrylic resin composition layer and the surface of the substrate film layer. Typically, the acrylic resin composition layer is 100 µm to 1000 µm or 150 µm to 700 µm in thickness. Generally speaking, the acrylic resin composition layer is substantially uniform in thickness and extends over the entire surface of the substrate film layer. Alternatively, as explained further below, a monolithic film or sheet is formed by extrusion, injection molding or other such melt processing technique, with no substrate film layer being present. When injection molded, the monolithic film or sheet typically has a thickness of 100 to 4000 µm or 300 to 3000 µm.

To prepare films and sheets in accordance with the invention, the following procedure may be used. A melt-processable acrylic resin composition may first be obtained by compounding acrylic resin, white pigment and any other desired additives (e.g., impact modifier, matting agent, UV stabilizer, antioxidant, and/or processing additives) in a twin screw extruder or the like at an elevated temperature effective to melt or soften the acrylic polymer sufficiently to achieve good mixing of the various components to form pellets, beads, or the like by extrusion through a die and pelletization. The pigment may be pre-blended in a portion of acrylic polymer prior to being compounded with the rest of the acrylic polymer and other components. The compounded product thus obtained may be further dried, if so desired, prior to extrusion, co-extrusion, extrusion coating, (co)injection molding, in-molding decoration (IMD) or other such melt processing forming method to provide the films and sheets of the present invention. It is also possible to melt-compound the components of the acrylic resin composition and form an optical reflective sheet or film in accordance with the invention directly without first preparing the aforementioned beads or pellets.

In one embodiment of the invention, a suitable substrate film layer is selected and a layer of the melt-processable acrylic resin composition extruded on at least one side of the substrate film layer. Application of the acrylic coating by an extrusion method or other melt processing technique is advantageous in that it avoids the need to place the components of the acrylic coating in a liquid medium such as an organic solvent or water (as an aqueous dispersion) and subsequently remove the liquid medium by drying after the acrylic resin composition layer has been applied to the substrate film layer.

The surface of the substrate film layer to be coated by an extrusion technique may have first been primed. Extrusion of the acrylic resin composition may be carried out using any suitable method known in the art, such as through the use of co-extrusion or the like. Generally, it will be desirable to apply a substantially uniform layer of the acrylic resin composition, typically having a thickness sufficient to provide an acrylic resin composition layer of from 100 to 1000 µm in thickness. If both sides of the substrate film layer are to be coated, each side may be coated successively or both sides may be coated simultaneously. The acrylic resin compositions applied to each side may be the same as or different from each other. A micro-scaled surface embossing process may be employed. The coated film may thereafter be cut or otherwise fabricated to have the dimensions or configuration suitable for use in an LED lighting fixture, an automotive LED lighting, or a LED backlit unit.

In another embodiment of the invention, the acrylic resin composition layer(s) and the substrate film layer are extruded simultaneously in a co-extrusion process. That is, the substrate film layer is not preformed and the acrylic resin composition layer(s) extruded thereon, but rather is formed by a melt-processing technique at the same time as the acrylic resin composition layer(s).

In another embodiment of the invention, no substrate film layer is employed. Instead, a monolithic film or sheet is formed by extrusion, injection molding or other such melt-processing technique. That is, the acrylic resin composition is melt-processed and shaped by extrusion or injection molding or the like to form the monolithic film or sheet. In this embodiment, the thickness of the monolithic sheet or film may be, for example, from 500 to 3000 µm or from 1000 to 2000 µm.

Optical reflectors in accordance with the present invention can be used in general LED lighting, automotive LED lighting, and LED backlit units for applications in handheld devices, notebooks, desktop monitors, LCD TVs, and the like. For example, the optical reflector is suitable for improving the light brightness and light uniformity in lighting sources like LED and cold cathode fluorescent lamp (CCFL). The white optical reflector can be located behind a light guide panel in a backlight unit and/or be used as a light bulb reflector. The optical reflector can be used in white LED lighting with improved brightness, light uniformity and energy savings.

### Examples

### Example 1.

A high Tg Plexiglas^{®} V825-100 resin (Tg=114°C) made at Arkema was compounded with a core-shell impact modifier having a particle size of 250-300nm, white R105 TiO₂ pigment from DuPont blended with VM grade acrylic polymer and Paraloid^{®} EXL 5136 matting agent (having a particle size of 8 µm, from Dow Chemical) to form white acrylic resin compositions using a 27 mm twin-screw extruder (from Leistritz) at a die temperature of 240°C and a processing speed of 27.21 kg/hour (60 lbs/hour). UV stabilizer was also added into the formulation during the compounding. The compounded acrylic pellets were dried at 85°C overnight. The melt flow rate was measured at 1.6 g/ for 10 minutes under 3.8Kg at 230°C.

| Formulation 1 | Grams | % |
|---|---|---|
| Acrylic Polymer V825-100 | 2100 | 35.0 |
| Core-Shell Impact | 1400 | 23.3 |
| Modifier | | |
| EXL5136 Matting Agent | 500 | 8.3 |
| VM -100 | 900 | 15.0 |
| R105 in conc. (TiO₂, 55% in VM) | 1100 | 18.3 |
| Subtotal | 5500 | 100 |
| UV Package | 124.50 | 2.541% |
| Stearic acid | 2.00 | 0.041% |
| Tinuvin^{®} 234 | 71.05 | 1.450% |
| Irganox^{®} 1010 | 34.30 | 0.700% |
| Irgafos^{®} 126 | 17.15 | 0.350% |
| Total (g) | 5624.50 | |

A 0.381 mm (15-mil) thick white reflective layer of the above formulation was co-extruded over a 1.143 mm (45-mil) ABS substrate using a single manifold die with a B/B/A/A/A feed block (from Cloeren) at a temperature of 245°C. The melt flow rate of the ABS used (752 NAT from Ineos) was measured at 0.72 g for 10 minutes under 3.8Kg at 230°C. The width of the co-extruded white sheet sample was controlled at 27.94 cm (11 inches). The chiller roll temperature was controlled at 80-90°C. The optical reflectance at 560 nm was measured at 97.1% using a Perkin Elmer Lambda 950 with 150 mm integrating sphere. The surface gloss was measured at 26-28 GU at the setting angle of 60°.

### Example 2.

A high Tg Plexiglas^{®} V825-100 resin (Tg=114°C) made at Arkema was compounded with a core-shell impact modifier having a particle size of 250-300 nm, white R105 TiO₂ pigment from DuPont blended with VM grade acrylic polymer and Altuglas^{®} BS130 matting agent (having a particle size of 20 µm, from Arkema, France) to form white acrylic resins using a 27 mm twin-screw extruder (from Leistritz) at a die temperature of 250°C and a processing speed of 27.21 kg/hour (60 lbs/hour). UV stabilizer was also added into the formulation during the compounding. The compounded acrylic pellets were dried at 85°C overnight. The melt flow rate was measured at 1.4 g/ for 10 minutes under 3.8Kg at 230°C.

| Formulation 2 | Grams | % |
|---|---|---|
| Acrylic Polymer V825-100 | 2100 | 42.0 |
| Core-Shell Impact Modifier | 1400 | 28.0 |
| BS130 Matting Agent | 500 | 10.0 |
| VM-100 | 450 | 9.0 |
| R105 in conc.(TiO₂, 55% in VM) | 550 | 11.0 |
| Subtotal | 5000 | 100 |
| UV Package | 113.25 | 2.545% |
| Stearic acid (0%) | 2.00 | 0.045% |
| Tinuvin^{®} 234 | 64.53 | 1.450% |
| Irganox^{®} 1010 | 31.15 | 0.700% |
| Irgafos^{®} 126 | 15.58 | 0.350% |
| Total (g) | 5113.25 | |

A 0.508 mm (20-mil) white reflective layer of above formulation 2 was co-extruded over a 1.016 mm (40-mil) ABS (752 NAT from Ineos) substrate using a single manifold die with a B/B/A/A/A feed block (from Cloeren) at a temperature of 245°C. The width of the co-extruded white sheet sample was controlled at 27.94 cm (11 inches). The chiller roll temperature was controlled at 80-90°C. The optical reflectance at 560 nm was measured at 96.0% using Perkin Elmer Lambda 950 with 150 mm integrating sphere. The surface gloss was measured at 15-16 GU at a setting angle of 60°.

### Example 3.

A high Tg Plexiglas^{®} HT121 resin (Tg=124°C) (from Arkema) was compounded with a core-shell impact modifier having a particle size of 250-300 nm, white R105 TiO₂ pigment from DuPont blended with VM grade acrylic polymer and Paraloid^{®} EXL 5136 matting agent (having a particle size of 8 µm, from Dow Chemical) to form a white acrylic resin composition using a 27 mm twin-screw extruder (from Leistritz) at a die temperature of 245°C and a processing speed of 27.21 kg/hour (60 lbs/hour). UV stabilizer was also added into the formulation during the compounding. The compounded acrylic pellets were dried at 85°C overnight. The melt flow rate was measured at 1.4 g/ for 10 minutes under 3.8Kg at 230°C.

| Formulation 3 | Grams | % |
|---|---|---|
| Acrylic Polymer HT121 | 2100 | 35.0 |
| Core-Shell Impact Modifier | 1400 | 23.3 |
| EXL5136 Matting Agent | 500 | 8.3 |
| VM -100 | 900 | 15.0 |
| R105 in conc.(TiO₂, 55% in VM) | 1100 | 18.3 |
| Subtotal | 5500 | 100 |
| UV Package | 124.50 | 2.541% |
| Stearic acid | 2.00 | 0.041% |
| Tinuvin^{®} 234 | 71.05 | 1.450% |
| Irganox^{®} 1010 | 34.30 | 0.700% |
| Irgafos^{®} 126 Total (g) | 17.15 5624.50 | 0.350% |

A 0.381 mm (15-mil) (380 µm) white reflective layer of above formulation 3 was co-extruded over 1) a 1.143 mm (45-mil) ABS (752 NAT from Ineos plus 4% of #63Z1526 grey ABS concentrate from Penn Color) and 2) a 1.143 mm (45-mil) impact acrylic polymer (Plexiglas^{®} DR101 from Altuglas) substrate using a single manifold die with a B/B/A/A/A feed block (from Cloeren) at a temperature of 240-250°C. The melt flow rate of the Plexiglas^{®} DR101 was measured at 1.0 g for 10 minutes under 3.8Kg at 230°C. The width of the co-extruded white sheet sample was controlled at 27.94 cm (11 inches). The chiller roll temperature was controlled at 80-90°C. The optical reflectance at 560 nm was measured at 97.1% from acrylic/grey ABS samples (vs. 97.0% from acrylic/DR101) using Perkin Elmer Lambda 950 with 150 mm integrating sphere. The surface gloss was measured at 28 GU at a setting angle of 60°. No light leakage was detected from the backside of the co-extruded sheets with a grey ABS.

### Example 4.

A high Tg Plexiglas^{®} HT121NA resin (Tg=124°C) made at Arkema was compounded with a core-shell impact modifier with a particle size of 250-300nm, white R105 TiO₂ pigment from DuPont blended with VM grade acrylic polymer and Altuglas^{®} BS130 matting agent (having a particle size of 20 µm, from Arkema, France) to form a white acrylic resin composition using a 27 mm twin-screw extruder (from Leistritz) at the die temperature of 245 °C at a processing speed of 27.21 kg/hour (60 lbs/hour) . UV stabilizer was also added into the formulation during the compounding. The compounded acrylic pellets were dried at 85°C overnight. The melt flow rate was measured at 1.2 g/ for 10 minutes under 3.8Kg at 230°C.

| Formulation 4 | Grams | % |
|---|---|---|
| Acrylic Polymer HT121 | 2100 | 42.0 |
| Core-Shell Impact Modifier | 1400 | 28.0 |
| BS130 Matting Agent | 500 | 10.0 |
| VM-100 | 450 | 9.0 |
| R105 in conc.(TiO₂, 55% in VM) | 550 | 11.0 |
| Subtotal | 5000 | 100 |
| UV Package | 113.25 | 2.545% |
| Stearic acid | 2.00 | 0.045% |
| Tinuvin^{®} 234 | 64.53 | 1.450% |
| Irganox^{®} 1010 | 31.15 | 0.700% |
| Irgafos^{®} 126 | 15.58 | 0.350% |
| Total (g) | 5113.25 | |

A 0.508 mm (20-mil) white reflective layer of above formulation 4 was co-extruded over a 1.016 mm (40-mil) ABS (752 NAT from Ineos plus 4% of #63Z1526 grey ABS concentrate from Penn Color) substrate using a single manifold die with a B/B/A/A/A feed block (from Cloeren) at a temperature of 240-250°C. The width of the co-extruded white sheet sample was controlled at 27.94 cm (11 inches). The chiller roll temperature was controlled at 80-90°C. The optical reflectance at 560 nm was measured at 96.0% using Perkin Elmer Lambda 950 with 150 mm integrating sphere. The surface gloss was measured at 16 GU at a setting angle of 60°. No light leakage was detected from the backside of the co-extruded sheets with a grey ABS.

### Example 5.

High Tg Plexiglas^{®} V825-100 resin (Tg=114°C) made at Arkema was compounded with core-shell impact modifier having a particle size of 250-300nm, white R105 TiO₂ pigment from DuPont blended with VM grade acrylic polymer and Altuglas^{®} BS130 matting agent (having a particle size of 20 µm, from Arkema, France) to form a white acrylic resin composition using a 27 mm twin-screw extruder at a die temperature of 242°C and a processing speed of 27.21 kg/hour (60 lbs/hour). UV stabilizer was also added into the formulation during the compounding. The compounded acrylic pellets were dried at 90°C overnight. The melt flow rate was measured at 0.9 g/ for 10 minutes under 3.8Kg at 230°C.

| Formulation 5 | *Grams* | % |
|---|---|---|
| Acrylic Polymer V825-100 | 2100 | 48.3 |
| Core-Shell Impact Modifier | 1400 | 32.2 |
| BS130 Matting Agent | 450 | 10.3 |
| VM -100 | 180 | 4.1 |
| R105 in conc.(TiO₂, 55% in VM) | 220 | 5.1 |
| Subtotal | 4350 | 100 |
| UV Package | 105.25 | 2.548% |
| Stearic acid | 2.00 | 0.048% |
| Tinuvin^{®} 234 | 59.89 | 1.450% |
| Irganox^{®} 1010 | 28.91 | 0.700% |
| Irgafos^{®} 126 | 14.46 | 0.350% |
| Total (g) | 4455.25 | |

A 1.651 mm (65-mil) white reflective monolithic sheet of the above formulation 5 was extruded using a single manifold die with an A/A/A/A/A feed block (from Cloeren) at a temperature of 240-248°C. The width of the extruded white sheet sample was controlled at 29.21 cm (11.5 inches). The chiller roll temperature was controlled at 80-90°C. The optical reflectance at 560 nm was measured at 95.8% using a Perkin Elmer Lambda 950 with 150 mm integrating sphere. The surface gloss was measured at 18 GU at a setting angle of 60°.

### Example 6.

A high Tg Plexiglas^{®} V825-100 resin (Tg=114°C) made at Arkema was compounded with a core-shell impact modifier having a particle size of 250-300nm, white R105 TiO₂ pigment from DuPont blended with VM grade acrylic polymer and Altuglas^{®} BS130 matting agent (having a particle size of 20 µm, from Arkema, France) to form a white acrylic resin composition using a 27 mm twin-screw extruder (from Leistritz) at a die temperature of 242°C and a processing speed of 27.21 kg/hour (60 lbs/hour). UV stabilizer was also added into the formulation during the compounding. The compounded acrylic pellets were dried at 85°C overnight. The melt flow rate was measured at 0.95 g/ for 10 minutes under 3.8Kg at 230°C.

| Formulation 6 | *Grams* | % |
|---|---|---|
| Acrylic Polymer V825-100 | 2100 | 46.2 |
| Core-Shell Impact Modifier | 1400 | 30.8 |
| BS130 Matting Agent | 450 | 9.9 |
| VM -100 | 270 | 5.9 |
| R105 in conc.(TiO₂, 55% in VM) | 330 | 7.3 |
| Subtotal | 4550 | 100 |
| UV Package | 107.50 | 2.547% |
| Stearic acid | 2.00 | 0.047% |
| Tinuvin^{®} 234 | 61.19 | 1.450% |
| Irganox^{®} 1010 | 29.54 | 0.700% |
| Irgafos^{®} 126 | 14.77 | 0.350% |
| Total (g) | 4657.50 | |

A 15.25 cm x 15.25 cm (6"x6") white reflective plaque of above formulation 6 was injection molded at a thickness of 1.524 mm (0.060") under a pressure of 100T using Engel at a die temperature of 230-240°C. In addition to a bulk lighting scattering, a textured-surface mold (with MT-11000, Mold-Tech^{®} from Roehlen Industries) is required. The surface gloss is controlled at 10 GU. The optical reflectance was measured at 97.6% at 560 nm from the plaque using a Perkin Elmer Lambda 950 with 150 mm integrating sphere.

### Example 7.

High Tg Plexiglas^{®} HT121 resin (Tg=124°C) made at Arkema was compounded with core-shell impact modifier having a particle size of 250-300nm, white R105 TiO₂ pigment from DuPont blended with VM grade acrylic polymer and Altuglas^{®} BS130 matting agent (having a particle size of 20 µm, from Arkema, France) to form a white acrylic resin composition using a 27 mm twin-screw extruder at a die temperature of 245°C and a processing speed of 27.21 kg/hour (60 lbs/hour). UV stabilizer was also added into the formulation during the compounding. The compounded acrylic pellets were dried at 85°C overnight. The melt flow rate was measured at 0.8 g/ for 10 minutes under 3.8Kg at 230°C.

| Formulation 7 | Grams | % |
|---|---|---|
| Acrylic Polymer HT121 | 2100 | 47.2 |
| Core-Shell Impact Modifier | 1400 | 31.5 |
| BS130 Matting Agent | 450 | 10.1 |
| VM -100 | 225 | 5.1 |
| R105 TiO₂ in conc. | 275 | 6.2 |
| Subtotal | 4450 | 100 |
| UV Package | 106.38 | 2.548% |
| Stearic acid | 2.00 | 0.048% |
| Tinuvin^{®} 234 | 60.54 | 1.450% |
| Irganox^{®} 1010 | 29.23 | 0.700% |
| Irgafos^{®} 126 | 14.61 | 0.350% |
| Total (g) | 4556.38 | |

A 15.25 cm x 15.25 cm (6"x6") white reflective plaque of above formulation 7 was injection molded at a thickness of 1.524 mm (0.060") under pressure of 100T using Engel at a die temperature of 235-248°C. A textured-surface mold (with MT-11020, Mold-Tech^{®} from Roehlen Industries) is required. The surface gloss is controlled at 5 GU. The optical reflectance at 560 nm was measured at 97.3% from the plaque using a Perkin Elmer Lambda 950 with 150 mm integrating sphere.

### Example 8.

High Tg Plexiglas^{®} HT121 resin (Tg=124°C) made at Arkema was compounded with core-shell impact modifier having a particle size of 250-300nm, white R105 TiO₂ pigment from DuPont blended with VM grade acrylic polymer and Altuglas^{®} BS110 matting agent (having a particle size of 50 µm, from Arkema, France) to form a white acrylic resin composition using a 27 mm twin-screw extruder at a die temperature of 240-250°C and a processing speed of 22.67kg/hour (50 lbs/hour). UV stabilizer was also added into the formulation during the compounding. The compounded acrylic pellets were dried at 85°C overnight. The melt flow rate was measured at 1.2 g/ for 10 minutes under 3.8Kg at 230°C.

| Formulation 8 | Grams | % |
|---|---|---|
| Acrylic Polymer HT121 | 2100 | 45.7% |

| | | |
|---|---|---|
| Core-Shell Impact Modifier | 1400 | 30.4% |
| BS110 Matting Agent | 400 | 8.7% |
| VM -100 | 315 | 6.8% |
| R105 in conc.(TiO₂, 55% in VM) | 385 | 8.4% |
| Subtotal | 4600 | 100% |
| UV Package | 107.38 | 2.547% |
| Stearic acid | 2.00 | 0.047% |
| Tinuvin^{®} 234 | 61.12 | 1.450% |
| Irganox^{®} 1010 | 29.51 | 0.700% |
| Irgafos^{®} 126 | 14.75 | 0.350% |
| Total (g) | 4707.38 | |

A 15.25 cm x 15.25 cm (6"x6") white reflective plaque of above formulation 8 was injection molded at a thickness of 1.524 mm (0.060") under pressure of 100T using Engel at a die temperature of 235-240°C. A textured-surface mold (with MT-11040, Mold-Tech^{®} from Roehlen Industries) is required. The surface gloss is controlled at 4 GU. The optical reflectance at 560 nm was measured at 97.9% from the plaque using a Perkin Elmer Lambda 950 with 150 mm integrating sphere.

### Example 9.

High Tg Plexiglas^{®} HT121 resin (Tg=124°C) made at Arkema was compounded with core-shell impact modifier having a particle size of 250-300nm, white R105 TiO₂ pigment from DuPont blended with VM grade acrylic polymer to form a white acrylic resin composition using a 27 mm twin-screw extruder at a die temperature of 240-250°C and a processing speed of 22.67kg/hour (50 lbs/hour). UV stabilizer was also added into the formulation during the compounding. The compounded acrylic pellets were dried at 85°C overnight. The melt flow rate was measured at 1.4 g/ for 10 minutes under 3.8Kg at 230°C.

| Formulation 9 | Grams | % |
|---|---|---|
| Acrylic Polymer HT121 | 2100 | 52.5% |
| Core-Shell Impact Modifier | 1400 | 35.0% |
| VM -100 | 225 | 5.6% |
| R105 in conc.(TiO₂, 55% in VM) | 275 | 6.9% |
| Subtotal | 4000 | 100% |
| UV Package | 95.13 | 2.554% |
| Stearic acid | 2.00 | 0.054% |
| Tinuvin^{®} 234 | 54.01 | 1.450% |
| Irganox^{®} 1010 | 26.08 | 0.700% |
| Irgafos^{®} 126 | 13.04 | 0.350% |
| Total (g) | 4095.13 | |

A 15.25 cm x 15.25 cm (6"x6") white reflective plaque of above formulation 9 was injection molded at a thickness of 1.524 mm (0.060") under pressure of 100T using Engel at a die temperature of 235-240°C. A textured-surface mold (with MT-11010, Mold-Tech^{®} from Roehlen Industries) is required. The surface gloss is controlled at 6 GU. The optical reflectance at 560 nm was measured at 98.0% from the plaque using a Perkin Elmer Lambda 950 with 150 mm integrating sphere.

### Example 10.

High Tg Plexiglas^{®} HT121NA resin (Tg=124°C) made at Arkema was compounded with core-shell impact modifier having a particle size of 250-300nm, white R103 TiO₂ pigment from DuPont blended with VM grade acrylic polymer and Altuglas^{®} BS110 matting agent (having a particle size of 50 µm, from Arkema, France) to form a white acrylic resin composition using a 27 mm twin-screw extruder at a die temperature of 245°C and a processing speed of 22.67kg/hour (50 lbs/hour). UV stabilizer was also added into the formulation during the compounding. The compounded acrylic pellets were dried at 85°C overnight. The melt flow rate was measured at 1.2 g/ for 10 minutes under 3.8Kg at 230°C.

| Formulation 10 | Grams | % |
|---|---|---|
| Acrylic Polymer HT121 | 2100 | 42.0% |
| Core-Shell Impact Modifier | 1400 | 28.0% |
| BS110 Matting Agent | 500 | 10.0% |
| VM -100 | 450 | 9.0% |
| R103 TiO₂ | 550 | 11.0% |
| Subtotal | 5000 | 100% |
| UV Package | 113.25 | 2.545% |
| Stearic acid | 2.00 | 0.045% |
| Tinuvin^{®} 234 | 64.53 | 1.450% |
| Irganox^{®} 1010 | 31.15 | 0.700% |
| Irgafos^{®} 126 | 15.58 | 0.350% |
| Total (g) | 5113.25 | |

A 0.356/0.305 mm 14/12-mil thick white reflective layer of the above formulation 10 was co-extruded on top of a 0.864 mm (34-mil) ABS substrate on both sides to form a A/B/A structured sheet using a single manifold die with a B/A/A/A/C feed block (from Cloeren) at a temperature of 240-250°C. The melt flow rate of ABS (752 NAT from Ineos) was measured at 0.72 g/ for 10 minutes under 3.8Kg at 230C. The width of the co-extruded white sheet sample was controlled at 29.21 cm (11.5 inches). The chiller roll temperature was controlled at 80-90°C. The optical reflectance was measured at 95% at 560 nm from the acrylic/ABS/acrylic sheet (at the thickness of 0.356/0.864/0.305 mm (14/34/12mils)) using a Perkin Elmer Lambda 950 with 150 mm integrating sphere. The surface gloss was measured at 16-19 GU at the setting angle of 60°.

### Example 11 (monolithicBS110).

High Tg Plexiglas^{®} HT121 resin (Tg=124°C) made at Arkema was compounded with core-shell impact modifier having a particle size of 250-300nm, white R105 TiO₂ pigment from DuPont blended with VM grade acrylic polymer and Altuglas^{®} BS110 matting agent (having a particle size of 50 µm, from Arkema, France) to form a white acrylic resin composition using a 27 mm twin-screw extruder at a die temperature of 242°C and a processing speed of 27.21 kg/hour 60 lbs/hour. UV stabilizer was also added into the formulation during the compounding. The compounded acrylic pellets were dried at 90°C overnight. The melt flow rate was measured at 0.9 g/ for 10 minutes under 3.8Kg at 230°C.

| | | |
|---|---|---|
| Formulation 11 | *Grams* | % |
| Acrylic Polymer HT121 | 2100 | 45.7% |
| Core-Shell Impact Modifier | 1400 | 30.4% |
| BS110 Matting Agent | 600 | 13.0% |
| VM -100 | 225 | 4.9% |
| R105 in conc.(TiO₂, 55% in VM) | 275 | 6.0% |
| Subtotal | 4600 | 100% |
| UV Package | 54.73 | 1.265% |
| Stearic acid | 0.99 | 0.023% |
| Tinuvin^{®} 234 | 31.17 | 0.721% |
| Irganox^{®} 1010 | 15.05 | 0.348% |
| Irgafos^{®} 126 | 7.52 | 0.174% |
| Total (g) | 4654.73 | |

A 1.651 mm (65-mil) white reflective monolithic sheet of the above formulation 11 was extruded using a single manifold die with an A/A/A/A/A feed block (from Cloeren) at a temperature of 240-248°C. The width of the extruded white sheet sample was controlled at 29.21 cm (11.5 inches). The chiller roll temperature was controlled at 90°C. The optical reflectance at 560 nm was measured at 95.7% using a Perkin Elmer Lambda 950 with 150 mm integrating sphere. The surface gloss was measured at 11-13 GU at a setting angle of 60°.

### Example 12 (high reflective/low gloss formulation/grey ABS)

A high Tg Plexiglas^{®} HT121 resin (Tg=124°C) (from Arkema) was compounded with a core-shell impact modifier having a particle size of 250-300 nm, white R105 TiO₂ pigment from DuPont blended with VM-100 grade acrylic polymer and and Altuglas^{®} BS130 matting agent (having a particle size of 20 µm, from Arkema, France) to form a white acrylic resin composition using a 27 mm twin-screw extruder (from Leistritz) at a die temperature of 245°C and a processing speed of 27.21kg/hour (60 lbs/hour). UV stabilizer was also added into the formulation during the compounding. The compounded acrylic pellets were dried at 90°C overnight. The melt flow rate was measured at 0.5 g/ for 10 minutes under 3.8Kg at 230°C.

| | | |
|---|---|---|
| Formulation 12 | Grams | % |
| Acrylic Polymer HT121 | 2070 | 36.8% |
| Core-Shell Impact Modifier | 1200 | 21.3% |
| BS130 Matting Agent | 800 | 14.2% |
| VM-100 | 225 | 4.0% |
| R105 TiO₂ | 1330 | 23.6% |
| Subtotal | 5625 | 100% |
| UV Package | 44.27 | 1.04% |
| Stearic acid | 0 | 0.00% |
| Tinuvin^{®} 234 | 25.65 | 0.60% |
| Irganox^{®} 1010 | 12.35 | 0.29% |
| Irgafos^{®} 168 | 6.27 | 0.15% |
| Total (g) | 5672.27 | |

A 0.508 mm (20-mil) white reflective layer of above formulation 12 was co-extruded over a 1.016 mm 40-mil ABS (752 NAT from Ineos plus 4% of #63Z1526 grey ABS concentrate from Penn Color) substrate using a single manifold die with a B/B/A/A/A feedblock (from Cloeren) at a temperature of 235-248°C. The width of the co-extruded white sheet sample was controlled at 27.94 cm (11 inches). The chiller roll temperature was controlled at 90°C. The optical reflectance at 560 nm was measured at 97.4% from acrylic/grey ABS samples using Perkin Elmer Lambda 950 with 150 mm integrating sphere. The surface gloss was measured at 8 GU at a setting angle of 60°. No light leakage was detected from the backside of the co-extruded sheets with a grey ABS.

### Example 13 (high reflective/low gloss formulation/grey ABS plus film)

A high Tg Plexiglas^{®} HT121 resin (Tg=124°C) (from Arkema) was compounded with a core-shell impact modifier having a particle size of 250-300 nm, white R105 TiO₂ pigment from DuPont blended with VS-100 grade acrylic polymer and and Altuglas^{®} BS130 matting agent (having a particle size of 20 µm, from Arkema, France) to form a white acrylic resin composition using a 27 mm twin-screw extruder (from Leistritz) at a die temperature of 245°C and a processing speed of 27.21kg/hour (60 lbs/hour). UV stabilizer was also added into the formulation during the compounding. The compounded acrylic pellets were dried at 85°C overnight. The melt flow rate was measured at 0.6 g/ for 10 minutes under 3.8Kg at 230°C.

| Formulation 13 | Grams | % |
|---|---|---|
| Acrylic Polymer HT121 | 1450 | 37.7 |
| Core-Shell Impact Modifier | 800 | 20.8 |
| BS130 Matting Agent | 550 | 14.3 |
| VS-100 | 150 | 3.9 |
| R105 TiO₂ | 900 | 23.3 |
| Subtotal | 3850 | 100 |
| UV Package | 42.94 | 1.45% |
| Stearic acid | 1 | 0.03% |
| Tinuvin^{®} 234 | 24.3 | 0.82% |
| Irganox^{®} 1010 | 11.7 | 0.40% |
| Irgafos^{®} 168 | 5.94 | 0.20% |
| Total (g) | 3892.94 | |

A 0.381 mm (15-mil) (380 µm) white reflective layer of above formulation 13 was co-extruded over a 1.143 mm (45-mil) ABS (752 NAT from Ineos plus 4% of #63Z1526 grey ABS concentrate from Penn Color) substrate using a single manifold die with a B/B/A/A/A feedblock (from Cloeren) at a temperature of 235-248°C. The width of the co-extruded white sheet sample was controlled at 27.94 cm (11 inches). The chiller roll temperature was controlled at 90°C. The optical reflectance at 560 nm was measured at 97.5% from acrylic/grey ABS samples using Perkin Elmer Lambda 950 with 150 mm integrating sphere (vs. 97.0% at 560 nm from a co-extruded acrylic/grey ABS film at the thickness of 250um/250um). The surface gloss was measured at 5-8 GU at a setting angle of 60°. No light leakage was detected from the backside of the co-extruded sheets with a grey ABS.

### Example 14 (high reflective/high gloss formulation/grey ABS plus film)

A high Tg Plexiglas^{®} HT121 resin (Tg=124°C) (from Arkema) was compounded with a core-shell impact modifier having a particle size of 250-300 nm, white R105 TiO₂ pigment from DuPont blended with VM-100 grade acrylic polymer to form a white acrylic resin composition using a 27 mm twin-screw extruder (from Leistritz) at a die temperature of 245°C and a processing speed of 27.21kg/hour (60 lbs/hour). UV stabilizer was also added into the formulation during the compounding. The compounded acrylic pellets were dried at 85°C overnight. The melt flow rate was measured at 1.3 g/ for 10 minutes under 3.8Kg at 230°C.

| Formulation 14 | Grams | % |
|---|---|---|
| Acrylic Polymer HT121 | 3406.5 | 50.8% |
| Core-Shell Impact Modifier | 1500 | 22.4% |
| VM-100 | 200 | 3.0% |
| R105 TiO₂ | 1593.5 | 23.8% |
| Subtotal | 6700 | 100% |
| UV Package | 76.5 | 1.50% |
| Stearic acid | 1.5 | 0.03% |
| Tinuvin^{®} 234 | 43.5 | 0.85% |
| Irganox^{®} 1010 | 21.0 | 0.41% |
| Irgafos^{®} 168 | 10.5 | 0.21% |
| Total (g) | 6776.5 | |

A 0.381 mm (15-mil) (380 µm) white reflective layer of above formulation 14 was co-extruded over a 1.143 mm (45-mil) ABS (752 NAT from Ineos plus 4% of #63Z1526 grey ABS concentrate from Penn Color) substrate using a single manifold die with a B/B/A/A/A feedblock (from Cloeren) at a temperature of 235-248°C. The width of the co-extruded white sheet sample was controlled at 27.94 cm (11 inches). The chiller roll temperature was controlled at 90°C. The optical reflectance at 560 nm was measured at 98.0% from acrylic/grey ABS samples using Perkin Elmer Lambda 950 with 150 mm integrating sphere (vs. 97.5% at 560 nm from a co-extruded acrylic/grey ABS film at the thickness of 250um/200um). The surface gloss was measured at 86-87 GU at a setting angle of 60°. No light leakage was detected from the backside of the co-extruded sheets with a grey ABS.

### Example 15 (injection molding or monolithic/BaSO4 BF formulation)

A high Tg Plexiglas^{®} HT121 resin (Tg=124°C) (from Arkema) was compounded with a core-shell impact modifier having a particle size of 250-300 nm, white R105 TiO₂ pigment from DuPont blended with VS-100 grade acrylic polymer and and Cimbar^{®} BF grade BaSO4 (having a particle size of 0.8 µm, from Cimbar, US) to form a white acrylic resin composition using a 27 mm twin-screw extruder (from Leistritz) at a die temperature of 245°C and a processing speed of 22.67kg/hour (50 lbs/hour). UV stabilizer was also added into the formulation during the compounding. The compounded acrylic pellets were dried at 85°C overnight. The melt flow rate was measured at 0.9 g/ for 10 minutes under 3.8Kg at 230°C.

| Formulation 15 | Grams | % |
|---|---|---|
| Acrylic Polymer HT121 | 2000 | 45.5% |
| Core-Shell Impact Modifier | 1400 | 31.8% |
| BaSO4 BF grade (0.8um) | 350 | 8.0% |
| VS-100 | 195 | 4.4% |
| R105 TiO₂ | 455 | 10.3% |
| Subtotal | 4400 | 100% |
| UV Package | 45.92 | 1.28% |
| Stearic acid | 1.0 | 0.03% |
| Tinuvin^{®} 234 | 26.95 | 0.75% |
| Irganox^{®} 1010 | 11.23 | 0.31% |
| Irgafos^{®} 168 | 6.74 | 0.19% |
| Total (g) | 4445.92 | |

A 5.08 cm x 7.62 cm (2"x 3") white reflective plaque of above formulation 15 was injection molded at a thickness of 3.175 mm (0.125") under pressure of 100T using Engel at a die temperature of 230-240°C. The surface gloss is measured at 86 GU at a setting angle of 60°. The optical reflectance at 560 nm was measured at 98.2% from the plaque using a Perkin Elmer Lambda 950 with 150 mm integrating sphere.

The melt flow rate (index) of the compounded acrylic polymers was measured with a die of 2.0955 mm in diameter and 8.000 mm in length under 3.8Kg at 230°C using Tinus Olsen Model MP933.

The representative parameters for injection molding using 100T Engel to prepare the 15.25 cm x 15.25 cm (6"x6") plaques were as follows:

| | |
|---|---|
| Feed temperature (°C) / (°F) | 237.8 / (460) |
| Transition temperature (°C) / (°F) | 243.3 / (470) |
| Metering temperature (°C) / (°F) | 248.9 / (480) |
| Nozzle temperature (°C) / (°F) | 232.2 / (450) |
| Mold temperature (°C) / (°F) | 73.9 / (165) |
| Boost pressure (kPa) / (psi) | 9653 / (1400) |
| Back pressure (kPa) / (psi) | 689.5- 827.4 / (100-120) |
| Injection speed (cm/s) (in/second) | 2.54 (1.0) |

The optical reflectance of the optical reflection films was measured in a reflection mode using a Perkin Elmer Lambda 950 with a 150 mm integrating sphere. The instrument was calibrated with a certified reflectance standard (Spetralon with R%=99%).

The surface gloss of the optical reflection films was measured at a measuring angle of 60 degrees using a BYK Spectro-Guide or a BYK Micro-Tri-Gloss Meter (20, 60 and 85 degrees).

## Claims

1. A lighting device comprised of a light emitting diode and a film or sheet or profile suitable for use as an optical reflector, comprising a layer of a melt-processable acrylic resin composition comprised of
- an acrylic polymer and
- a white pigment at not more than 40 weight % and
- up to 20 weight % of a matting or diffusion agent;
wherein said matting agent is selected from the group consisting of barium sulfate particles, aluminum oxide particles, silicon oxide particles, hollow particles, organic particles, and fluoropolymers and
wherein the melt-processable acrylic resin composition has a melt flow rate (as measured in the description) of at more than 0.4 grams for 10 minutes under 3.8Kg at 230°C, wherein the film or the sheet or the profile further comprises a substrate film layer comprised of a thermoplastic polymer, or wherein the film or the sheet is a monolithic film or sheet.

2. The lighting device according to claim 1, wherein said lightning device is selected from the group of automotive lighting and backlit units.

3. The lighting device according to claim 1, wherein the layer of melt-processable acrylic resin composition is coated on at least one side of the substrate layer.

4. The lighting device according to claim 1, wherein the white pigment is selected from the group consisting of titanium dioxide, zinc oxide, PdS and barium sulfate.

5. The lighting device according to claim 3, wherein a first layer of melt-processable acrylic resin composition is present on a first side of the substrate layer and a second layer of melt-processable acrylic resin composition is present on a second side of the substrate layer, with the first layer of melt-processable acrylic resin composition and the second layer of melt-processable acrylic resin composition being the same as or different from each other.

6. The lighting device according to claim 1, wherein the acrylic polymer is impact modified.

7. The lighting device according to claim 1, wherein the acrylic polymer has a Tg of at least 80°C, the Tg is measured according to the method disclosed in the specification.

8. The lighting device according to claim 1, wherein the acrylic polymer contains acid functional monomer.

9. The lighting device according to claim 3, wherein the substrate layer has a thickness of from 100 to 3000 µm.

10. The lighting device according to claim 1, wherein the substrate layer and melt-processable acrylic resin composition are co-extruded.

11. The lighting device according to claim 1, wherein the layer of melt-processable acrylic resin composition has a thickness of 100 to 1000 µm.

12. The lighting device according to claim 1, wherein the substrate layer is comprised of a thermoplastic polymer selected from the group consisting of acrylics, ABS, ASA, SAN, PET, PEN, PET-co-PEN, PET-co-PETG, PC and PC/ABS blends.

13. The lighting device according to claim 1, wherein the melt-processable acrylic resin composition is additionally comprised of a core-shell impact modifier.

14. The lighting device according to claim 1, wherein the melt-processable acrylic resin composition is additionally comprised of one or more additives selected from the group consisting of UV stabilizers, antioxidants, and processing additives.

15. The lighting device according to claim 1, wherein the film or sheet is a single layer.

## Patentansprüche

1. Beleuchtungsvorrichtung, bestehend aus einer Leuchtdiode und einem Film oder einer Folie oder einem Profil, der/die zur Verwendung als optischer Reflektor geeignet ist, umfassend eine Schicht aus einer schmelzverarbeitbaren Acrylharzzusammensetzung, umfassend
- ein Acrylpolymer und
- ein weißes Pigment mit höchstens 40 Gew.-% und
- bis zu 20 Gew.-% eines Mattierungs- oder Diffusionsmittels;
wobei das Mattierungsmittel aus der Gruppe ausgewählt ist, die aus Bariumsulfatpartikeln, Aluminiumoxidpartikeln, Siliziumoxidpartikeln, hohlen Partikeln, organischen Partikeln und Fluorpolymeren besteht, und
wobei die schmelzverarbeitbare Acrylharzzusammensetzung eine Schmelzflussrate (wie in der Beschreibung gemessen) von mehr als 0,4 Gramm für 10 Minuten unter 3,8 kg bei 230 °C aufweist, wobei der Film oder die Folie oder das Profil ferner eine Substratfilmschicht umfasst, die aus einem thermoplastischen Polymer besteht, oder wobei der Film oder die Folie ein monolithischer Film oder eine monolithische Folie ist.

2. Beleuchtungsvorrichtung nach Anspruch 1, wobei die Beleuchtungsvorrichtung aus der Gruppe der Fahrzeugbeleuchtung und der hinterleuchteten Einheiten ausgewählt ist.

3. Beleuchtungsvorrichtung nach Anspruch 1, wobei die Schicht aus schmelzverarbeitbarer Acrylharzzusammensetzung auf mindestens eine Seite der Substratschicht aufgetragen ist.

4. Beleuchtungsvorrichtung nach Anspruch 1, wobei das Weißpigment ausgewählt ist aus der Gruppe bestehend aus Titandioxid, Zinkoxid, PdS und Bariumsulfat.

5. Beleuchtungsvorrichtung nach Anspruch 3, wobei eine erste Schicht aus einer schmelzverarbeitbaren Acrylharzzusammensetzung auf einer ersten Seite der Substratschicht und eine zweite Schicht aus einer schmelzverarbeitbaren Acrylharzzusammensetzung auf einer zweiten Seite der Substratschicht vorhanden ist, wobei die erste Schicht aus einer schmelzverarbeitbaren Acrylharzzusammensetzung und die zweite Schicht aus einer schmelzverarbeitbaren Acrylharzzusammensetzung gleich oder verschieden voneinander sind.

6. Beleuchtungsvorrichtung nach Anspruch 1, wobei das Acrylpolymer schlagzähmodifiziert ist.

7. Beleuchtungsvorrichtung nach Anspruch 1, wobei das Acrylpolymer eine Tg von mindestens 80 °C aufweist und die Tg nach dem in der Beschreibung offenbarten Verfahren gemessen wird.

8. Beleuchtungsvorrichtung nach Anspruch 1, wobei das Acrylpolymer ein säurefunktionelles Monomer enthält.

9. Beleuchtungsvorrichtung nach Anspruch 3, wobei die Substratschicht eine Dicke von 100 bis 3000 µm aufweist.

10. Beleuchtungsvorrichtung nach Anspruch 1, wobei die Substratschicht und die schmelzverarbeitbare Acrylharzzusammensetzung coextrudiert werden.

11. Beleuchtungsvorrichtung nach Anspruch 1, wobei die Schicht aus schmelzverarbeitbarer Acrylharzzusammensetzung eine Dicke von 100 bis 1000 µm aufweist.

12. Beleuchtungsvorrichtung nach Anspruch 1, wobei die Substratschicht aus einem thermoplastischen Polymer besteht, das aus der Gruppe bestehend aus Acryl, ABS, ASA, SAN, PET, PEN, PET-co-PEN, PET-co-PETG, PC und PC/ABS-Mischungen ausgewählt ist.

13. Beleuchtungsvorrichtung nach Anspruch 1, wobei die schmelzverarbeitbare Acrylharzzusammensetzung zusätzlich einen Kern-Schale-Schlagzähigkeitsmodifikator umfasst.

14. Beleuchtungsvorrichtung nach Anspruch 1, wobei die schmelzverarbeitbare Acrylharzzusammensetzung zusätzlich ein oder mehrere Additive enthält, die aus der Gruppe ausgewählt sind, die aus UV-Stabilisatoren, Antioxidantien und Verarbeitungsadditiven besteht.

15. Beleuchtungsvorrichtung nach Anspruch 1, wobei der Film oder die Folie aus einer einzigen Schicht besteht.

## Revendications

1. Dispositif d'éclairage composé d'une diode électroluminescente et d'un film ou d'une feuille ou d'un profilé approprié(e) pour l'utilisation en tant que réflecteur optique, comprenant une couche d'une composition de résine acrylique traitable à l'état fondu composée de
- un polymère acrylique, et
- un pigment blanc à non plus de 40 % en poids, et
- jusqu'à 20 % en poids d'un agent de matité ou de diffusion ;
dans lequel ledit agent de matité est sélectionné parmi le groupe constitué de : particules de sulfate de baryum, particules d'oxyde d'aluminium, particules d'oxyde de silicium, particules creuses, particules organiques, et fluoropolymères, et
dans lequel la composition de résine acrylique traitable à l'état fondu a un indice de fluidité (tel que mesuré dans la description) de plus de 0,4 grammes pendant 10 minutes sous 3,8 Kg à 230 °C, dans lequel le film ou la feuille ou le profilé comprend en outre une couche de film substrat composée d'un polymère thermoplastique, ou dans lequel le film ou la feuille est un film ou feuille monolithique.

2. Dispositif d'éclairage selon la revendication 1, dans lequel ledit dispositif d'éclairage est sélectionné parmi le groupe d'unités d'éclairage d'automobile et de rétroéclairage.

3. Dispositif d'éclairage selon la revendication 1, dans lequel la couche de composition de résine acrylique traitable à l'état fondu est enduite sur au moins une face de la couche de substrat.

4. Dispositif d'éclairage selon la revendication 1, dans lequel le pigment blanc est sélectionné parmi le groupe constitué de : dioxyde de titane, oxyde de zinc, PdS et sulfate de baryum.

5. Dispositif d'éclairage selon la revendication 3, dans lequel une première couche de composition de résine acrylique traitable à l'état fondu est présente sur une première face de la couche de substrat et une seconde couche de composition de résine acrylique traitable à l'état fondu est présente sur une seconde face de la couche de substrat, la première couche de composition de résine acrylique traitable à l'état fondu et la seconde couche de composition de résine acrylique traitable à l'état fondu étant identiques l'une à l'autre ou différentes l'une de l'autre.

6. Dispositif d'éclairage selon la revendication 1, dans lequel le polymère acrylique est modifié par impact.

7. Dispositif d'éclairage selon la revendication 1, dans lequel le polymère acrylique a un Tg d'au moins 80 °C, le Tg est mesuré selon le procédé décrit dans le mémoire descriptif.

8. Dispositif d'éclairage selon la revendication 1, dans lequel le polymère acrylique contient un monomère fonctionnel acide.

9. Dispositif d'éclairage selon la revendication 3, dans lequel la couche de substrat a une épaisseur de 100 à 3 000 µm.

10. Dispositif d'éclairage selon la revendication 1, dans lequel la couche de substrat et la composition de résine acrylique traitable à l'état fondu sont coextrudées.

11. Dispositif d'éclairage selon la revendication 1, dans lequel la couche de composition de résine acrylique traitable à l'état fondu a une épaisseur de 100 à 1 000 µm.

12. Dispositif d'éclairage selon la revendication 1, dans lequel la couche de substrat est composée d'un polymère thermoplastique sélectionné parmi le groupe constitué de : acryliques, ABS, ASA, SAN, PET, PEN, PET-co-PEN, PET-co-PETG, PC et mélanges PC/ABS.

13. Dispositif d'éclairage selon la revendication 1, dans lequel la composition de résine acrylique traitable à l'état fondu est de plus composée d'un modificateur d'impact noyau-enveloppe.

14. Dispositif d'éclairage selon la revendication 1, dans lequel la composition de résine acrylique traitable à l'état fondu est de plus composée d'un ou de plusieurs additifs sélectionnés parmi le groupe constitué de : stabilisateurs UV, antioxydants, et additifs de traitement.

15. Dispositif d'éclairage selon la revendication 1, dans lequel le film ou la feuille est une seule couche.
